# EUROPEAN PATENT SPECIFICATION

(11) **EP 4 520 450 B1**
(45) Date of publication and mention of the grant of the patent: **15.04.2026**
(21) Application number: 23195902.4
(22) Date of filing: 07.09.2023
(51) Int. Cl.: B21B 1/088, B21B 1/092, B64C 1/06

(54) **A METHOD FOR MANUFACTURING A MONOLITHIC COMPONENT**
VERFAHREN ZUR HERSTELLUNG EINER MONOLITHISCHEN KOMPONENTE
PROCÉDÉ DE FABRICATION D'UN COMPOSANT MONOLITHIQUE

(43) Date of publication of application: 12.03.2025
(73) Proprietor: Airbus Operations GmbH, 21129 Hamburg (DE)
(72) Inventor: Schulze, Wolfgang, 21129 Hamburg (DE); Rohde, Jens, 21129 Hamburg (DE)

(56) References cited:
- WO-A1-97/27009
- JP-A- S6 186 002
- JP-A- S61 259 801
- JP-A- S61 259 850
- US-B2- 10 308 345
- US-B2- 11 707 774

## Description

### Technical Field

The present invention relates to a method for manufacturing a monolithic component with integral branching points. The present invention further relates to a frame manufactured via said method and an aircraft comprising said frame.

### Background

In the contemporary aircraft manufacturing landscape, rollformed stringer and frame components have emerged as pivotal sheet metal elements that offer a notable cost advantage. Within this context, rollformed profiles provide production costs that is approximately half that of pressformed frames. This cost discrepancy predominantly stems from the strategic application of solution heat treatment and quenching during the coil material stage prior to the rollforming process. In contrast, pressformed frames require a subsequent heat treatment and quenching phase, introduced after the pressforming process. This additional step introduces intricate geometrical alterations and necessitates manual re-shaping of the parts, which contributes to elevated costs and operational complexities.

However, it is worth acknowledging a limitation associated with the rollforming approach. This limitation lies in the inherent nature of the process, whereby the split segments of the profile undergo a reduction in thickness, resulting in halves of the thickness witnessed in the unsplit portions of the profile. While the cost-effectiveness of rollformed profiles is evident, this trade-off in profile thickness serves as a noteworthy consideration, influencing the engineering and design aspects of the final components.

WO 9727009 A1 discloses a method for manufacturing an I-Beam with branching points. According to the method a sheet metal with a first section and a second section is provided. The second section is split-rollformed in a plane parallel to a surface area of the second section such that a first flange portion and a second flange portion is formed.

### Summary of the invention

It is an object to provide a manufacturing method for a monolithic component with integral branching points.

This object is achieved by means of the subjects of the independent claims. Illustrative embodiments will be found in the dependent claims and the following description.

According to one aspect, a method for manufacturing a monolithic component with integral branching points is provided. The method comprising the following steps:
(S1) providing a sheet metal comprising a first section and a second section,
(S2) thinning, via rollforming, the first section of the sheet metal,
(S3) splitting, via split-rollforming, the second section of the sheet metal in a plane parallel to a surface area of the second section, such that a first flange portion and a second flange portion is formed.

Monolithic refers to a single, unified, and continuous material or structure, without any distinct separations or components. It implies a seamless and uninterrupted composition where the entire entity provides cohesiveness and uniformity.

Integral branching points refer to specific locations within a structure or system where multiple components or elements come together in a cohesive and inseparable manner. These points are integral or essential to the overall functionality or design, serving as junctions where different paths or parts converge.

Sheet metal refers to a type of metal that has been formed into thin, flat sheets or plates. It is a versatile material used in manufacturing and construction due to its malleability and ease of fabrication. It can be bent, folded, cut, and formed into various shapes to meet specific design and functional requirements.

Rollforming is a manufacturing process used to shape flat sheet metal into specific profiles or cross-sectional shapes by passing it through a series of rollers. These rollers progressively bend and form the sheet metal into the desired shape. Rollforming is used for producing components with continuous lengths of uniform cross-sections, such as channels, angles, tubes, and other complex profiles. This process is efficient and cost-effective for high-volume production of consistent and precise shapes.

Split-rollforming refers to a specialized variation of the rollforming process where a single sheet of material is divided or split into multiple segments before undergoing the shaping and forming operations. In split-rollforming, the sheet is intentionally cut or split into sections along specific lines, which are then individually fed into the rollforming machine to create the desired profiles. This approach allows for the production of profiles with varying thicknesses or other distinct characteristics along their length. Split-rollforming is employed when components require specific variations in material properties or geometry, and it offers flexibility in achieving tailored designs while maintaining the benefits of rollforming efficiency.

A plane parallel to a surface area refers to a flat geometric plane that runs in a direction that is parallel to a specific surface. In this context, "parallel" means that the plane maintains a consistent and substantially equal distance from the surface along its entire length. This term is used to describe a plane that is oriented parallel to a designated surface, which can have implications for measurements, calculations, and design considerations.

A flange portion refers to a specific section or part of the sheet metal object, preferably flat and extending outward, that serves as an extension or projection from a main body of the sheet metal. Flange portions are used in to provide additional strength, support, or attachment points to a structure or component. Flange portions are configured to facilitate connections, enhance stability, and enable effective assembly in various mechanical and structural systems.

The use of sheet metal parts featuring integral branching points offers significant benefits in various industries and applications. One key advantage is the streamlined manufacturing process. The parts are configured with built-in junctions, which eliminates the need for separate joint areas or complex assembly steps. This speeds up production and improves overall efficiency.

The main characteristic of these integral branching points is that they create monolithic components. This means the structure is seamless and continuous. There is no need for overlapping sections or fasteners, which improves resistance to corrosion and fatigue. Importantly, this design eliminates potential weak spots that could weaken the structure.

A further advantage is the enhanced material capabilities. By carefully controlling the structure on a local level, these parts become harder and stronger. This makes them more durable. While hardness and strength increase, the ability of the material to stretch and bend, called ductility, is still maintained. This ensures that the component can still be shaped.

Additionally, these integral branching points open up new design possibilities. They allow for the creation of complex shapes by bending profiles over each other.

In summary, using sheet metal parts with integral branching points is a way to improve manufacturing processes and enhance material properties. The resulting monolithic parts are more resistant to corrosion and fatigue, while still allowing for versatile design options. This approach combines efficiency, strength, and flexibility in sheet metal fabrication.

According to one embodiment, the first section comprises a first initial thickness and the second section comprises a second initial thickness, wherein the first initial thicknesses is reduced via step S1 to a first reduced thickness, and wherein the second initial thickness is reduced via step S3 to a first flange portion thickness and a second flange portion thickness.

According to one embodiment, the first initial thickness and the second initial thickness are substantially the same. A preferred embodiment is that the first and second section are part of a sheet metal with constant thickness.

According to one embodiment, the first reduced thickness and/or the first flange portion thickness and/or the second flange portion thickness are substantially the same. An advantage of having the first and second flange portions with substantially the same thickness is that it promotes uniformity and balanced structural integrity, leading to enhanced load distribution and consistent performance across the component. This similarity in thickness contributes to better predictability of material behavior, improving manufacturing processes and design considerations.

According to one embodiment, the sheet metal further comprises a third section, wherein the first section is arranged between the second section and the third section of the sheet metal, wherein the method further comprises the step of:
(S4) splitting, via split-rollforming, the third section of the sheet metal in a plane parallel to a surface area of the third section, such that a third flange portion and a fourth flange portion is formed.

In this embodiment, an advantage is that the method achieves a comprehensive integration of branching points throughout the component. By incorporating a third section between the second and third sections of the sheet metal, and subsequently employing split-rollforming to split the third section parallel to its surface area, two additional flange portions - a third and fourth flange portion - are formed.

This approach further augments the structural complexity and versatility of the monolithic component, enabling enhanced load distribution, broader design possibilities, and potential optimization of overall component performance.

According to one embodiment, the sheet metal comprises a first longitudinal axis which divides the sheet metal in two substantially identical portions, and wherein the first section is arranged in a middle portion along the longitudinal axis between the second section and the third section of the sheet metal.

In this embodiment, a distinct advantage is achieved by leveraging the inherent symmetry of the sheet metal. The presence of a first longitudinal axis that precisely bisects the sheet metal into two nearly identical portions is advantageous. By situating the first section within the middle portion along this longitudinal axis, between the second and third sections, a harmonious arrangement emerges. This symmetry-based configuration offers benefits such as balanced load distribution, optimal use of material, and simplified manufacturing processes. Consequently, the component's structural integrity and efficiency are inherently enhanced.

According to one embodiment, the first longitudinal axis is an axis of symmetry of the sheet metal.

In this embodiment, an advantage stems from the strategic utilization of a first longitudinal axis as an axis of symmetry for the sheet metal. By aligning the symmetrical axis of the sheet metal with this longitudinal axis, a symmetrical distribution of properties and features is achieved. This symmetrical disposition has numerous benefits, including enhanced load-bearing capacity, balanced stress distribution, and simplified design considerations. The axis of symmetry contributes to the component's stability, predictability, and overall performance, thus reinforcing its functional and structural qualities.

According to one embodiment, following step S2, the sheet metal is separated along the longitudinal axis, such that the sheet metal is separated into two separated sheet metals, each sheet metal defining the sheet metal for step S3.

In this embodiment, a significant advantage emerges post the execution of step S2. The subsequent action involves splitting the sheet metal along the longitudinal axis, effectively dividing it into two distinct and separate sheet metals. This division results in two individual sheet metals, each serving as the basis for the subsequent step S3. This approach ensures an efficient and streamlined continuation of the manufacturing process, maintaining the integrity of each separated sheet metal while creating distinct paths for further forming operations. This advantage lies in the optimization of subsequent actions, allowing for parallel processing and enhanced production efficiency.

According to one embodiment, the sheet metal comprises a plurality of first sections, wherein each of the plurality of the first sections comprises a longitudinal axis, and a plurality of second sections, wherein each of the plurality of the second sections comprises a second longitudinal axis parallel to the first longitudinal axis, wherein the plurality of first sections and the plurality of second sections are arranged in an alternating manner, wherein, following step S2, the sheet metal is separated into a plurality of separated metal sheets:
along each of the plurality of the first longitudinal axes,
   and/or
along each of the plurality of the second longitudinal axes,
each separated metal sheets defining the sheet metal for step S3.

In this embodiment, a significant advantage arises from the organization of the sheet metal into distinct first and second sections. Each of these sections comprises a longitudinal axis, with the second sections having a longitudinal axis parallel to the first. The innovative arrangement involves alternating these first and second sections. Following step S2, the sheet metal undergoes separation, resulting in multiple individual metal sheets. This separation occurs along the longitudinal axes of both the first and second sections. Each of these separated metal sheets then serves as the substrate for subsequent step S3.

This approach offers several advantages. The alternating arrangement of sections contributes to balanced material distribution and load-bearing capacity. The separation along multiple longitudinal axes enables efficient individual processing of the metal sheets, enhancing production speed and precision. The outcome is an optimized manufacturing sequence that capitalizes on organized sectioning, efficient separation, and parallel processing for enhanced productivity and consistency.

According to one embodiment, before step S1, the sheet metal is solution heat treated.

In this embodiment, a significant advantage is derived from a preliminary solution heat treatment carried out prior to initiating step S1. By subjecting the sheet metal to this heat treatment, its internal structure is strategically altered, enhancing its mechanical properties and thermal stability. This pre-treatment lays the foundation for subsequent manufacturing steps, contributing to improved material behavior during forming processes. The advantage lies in the optimized material characteristics that result from the solution heat treatment, ultimately enhancing the overall quality and performance of the monolithic component with integral branching points.

According to one embodiment, before step S1, the sheet metal is stored at -18° C.

In this embodiment, an advantage stems from a specific preconditioning step prior to initiating step S1. The sheet metal is stored at a temperature of -18°C. This pre-storage action serves as a deliberate measure to optimize the properties of the material and its behavior. The advantage lies in the controlled temperature environment which helps to enhance the formability and stability of the material during subsequent manufacturing processes. This approach ensures that the sheet metal is effectively primed for the manufacturing sequence, ultimately resulting in improved quality and performance of the monolithic component with integral branching points.

According to one embodiment, the sheet metal comprises at least one of: steel, aluminum or thermoplast.

This diverse range of material options allows for tailored selections based on specific requirements, such as strength, weight, or temperature resistance. The advantage lies in the flexibility to choose a material that best suits the intended application, ensuring that the resulting monolithic component with integral branching points is optimized for performance, durability, and compatibility with various operational contexts.

Steel is renowned for its strength and durability. It offers excellent load-bearing capacity and resistance to wear, making it ideal for applications where structural integrity is paramount. Additionally, the malleability of steel allows for intricate shaping and forming processes, facilitating the creation of complex profiles with integral branching points. Its robustness and adaptability ensure that the resulting monolithic component can withstand demanding environments and heavy-duty applications.

Aluminum offers a favorable strength-to-weight ratio, making it a preferred choice for lightweight yet strong components. This characteristic is particularly advantageous for applications where reducing overall weight is crucial, such as aerospace and automotive industries. Aluminum's natural corrosion resistance ensures prolonged component lifespan, even in challenging conditions. Its high thermal conductivity is an added benefit, making it suitable for applications requiring efficient heat dissipation. The versatility and relatively low density of this material contribute to enhanced energy efficiency and ease of handling.

Thermoplasts offer unique advantages due to their inherent properties. They are highly moldable when heated, allowing for intricate shaping and complex geometries during the manufacturing process. Additionally, thermoplasts can be easily recycled and reprocessed, contributing to sustainability and environmental considerations. Their versatility in terms of color and finish options offers aesthetic flexibility, making them suitable for both functional and visual applications. Thermoplasts' chemical resistance and lightweight nature further broaden their applicability in various industries, ranging from consumer goods to medical devices.

Incorporating each of these materials within the sheet metal allows for tailored solutions that align with specific project requirements. By selecting the most appropriate material based on desired characteristics, the resulting monolithic component with integral branching points is poised to excel in terms of performance, functionality, and longevity across a diverse range of applications.

According to one embodiment, the sheet metal is a coil.

Coils offer inherent benefits that align with efficient and streamlined manufacturing processes. The advantage lies in the continuous nature of coils, which allows for uninterrupted forming and processing operations. This eliminates the need for frequent material reloading, contributing to enhanced production speed and consistency.

Furthermore, coils enable a seamless transition between various manufacturing steps, reducing potential disruptions and material handling. This not only optimizes the use of resources but also minimizes material wastage. The advantage of using a coil as the sheet metal substrate ensures a cohesive and well-integrated approach, promoting manufacturing efficiency and the realization of high-quality monolithic components with integral branching points.

According to another aspect, a frame is provided. Manufacturing a frame through the outlined manufacturing process introduces several inherent advantages that elevate its appeal for various applications. This method, involving a systematic sequence of steps, yields benefits that contribute to the overall quality, performance, and efficiency of the resulting frame.

By following a well-defined series of actions, the dimensions, features, and properties of the frame are finely controlled. This accuracy ensures that the final frame consistently meets design specifications, aligning with intended functionalities.

The use of rollforming in the initial step facilitates controlled thinning of the first section of the sheet metal. This technique not only ensures consistent material distribution but also optimizes its structural integrity. The resulting thinning enhances the frame's weight-to-strength ratio, offering a balance between lightweight construction and robustness.

The subsequent split-rollforming step introduces integral branching points through the formation of distinct flange portions. This innovative design element adds structural versatility, allowing the frame to efficiently distribute loads and stresses. The resulting flange portions enhance the frame's load-bearing capacity while contributing to its overall resilience.

Furthermore, the precision achieved through this method minimizes material wastage, optimizing resource utilization. This efficiency is instrumental in reducing production costs and environmental impact.

The utilization of parallel planes for splitting the second section ensures a harmonious alignment with the frame's surface, enhancing its aesthetic appeal. Additionally, the symmetry introduced by the method not only improves the visual symmetry of the frame but also translates into balanced structural properties.

These advantages collectively position frames produced through this process as appealing choices for a wide range of applications, where reliability, performance, and efficiency are of paramount importance.

The provided manufacturing process is described on the frame design but is in general also applicable for all stiffeners or brackets in the fuselage like for example shear clips, T-stringer, crash worthiness reinforced frames, crossbeams or struts, which today needed extrusion or milling or assembly steps with fastener.

According to another aspect, an aircraft comprising a frame manufactured with said method is provided.

### Brief description of the figures

Fig. 1 shows a flowchart of a method for manufacturing a monolithic component with integral branching points;
Fig. 2A and 2B show a sheet metal with a first section and a second section;
Fig. 3 shows a sheet metal comprising a third section;
Fig. 4 shows an example of a monolithic component with integral branching points;
Fig. 5 shows an airplane;
Fig. 6 shows a split-forming process.

### Detailed description

The illustrations in the figures are schematic and not to scale. If the same reference signs are used in different figures in the following description of the figures, they designate identical or similar elements. However, identical or similar elements can also be designated by different reference symbols.

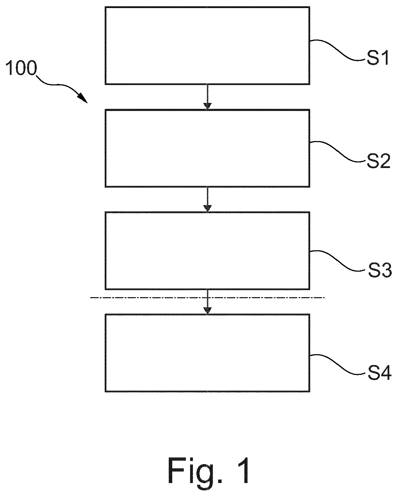

Fig. 1 shows a method 100 for manufacturing a monolithic component with integral branching points, comprising the following steps:
S1 providing a sheet metal 10 comprising a first section 12 and a second section 14,
S2 thinning, via rollforming, the first section 12 of the sheet metal 10,
S3 splitting, via Split-rollforming, the second section 14 of the sheet metal 10 in a plane parallel to a surface area of the second section 14, such that a first flange portion 16 and a second flange portion 18 is formed.

In an optional step, the sheet metal 10 further comprises a third section 20, wherein the first section 12 is arranged between the second section 14 and the third section 20 of the sheet metal 10, the method 100 further comprises the step of:
S4 splitting, via split-rollforming, the third section 20 of the sheet metal 10 in a plane parallel to a surface area of the third section 20, such that a third flange portion 22 and a fourth flange portion 24 is formed.

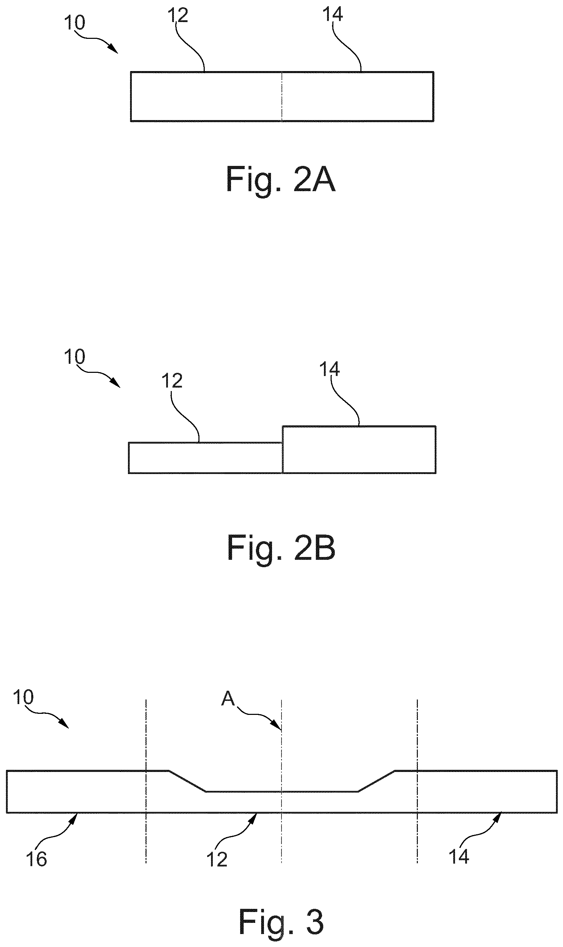

Fig. 2A and 2B show a sheet metal 10 with a first section 12 and a second section 14. As can be seen in Fig. 2A the first section 12 comprises a first initial thickness and the second section 14 comprises a second initial thickness, wherein the first initial thickness and the second initial thickness are substantially the same. According to step S2 of the method 100, the first section 12 of the sheet metal 10 is thinned via rollforming.

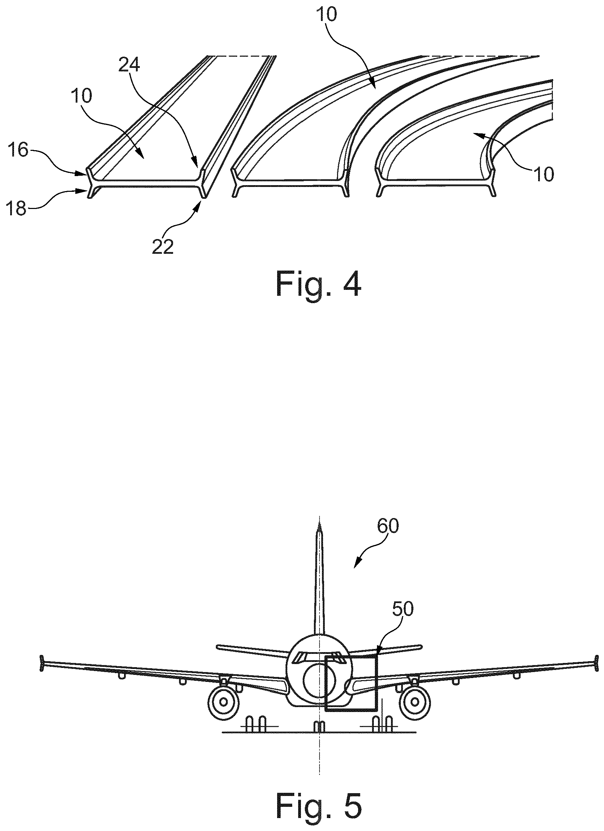

Fig. 3 shows a sheet metal 10, wherein the sheet metal 10 further comprises a third section 20. The first section 12 is arranged between the second section 14 and the third section 20 of the sheet metal 10. In this embodiment the method 100 further comprises the step of splitting S4, via split-rollforming, the third section 20 of the sheet metal 10 in a plane parallel to a surface area of the third section 20, such that a third flange portion 22 and a fourth flange portion 24 is formed. The third flange portion 22 and a fourth flange portion 24 are shown in detail in Fig. 4.

The sheet metal 10 comprises a longitudinal axis A which divides the sheet metal 10 in two substantially identical portions. The first section 12 is arranged in a middle portion along the longitudinal axis A between the second section 14 and the third section 20 of the sheet metal 10. In the shown embodiment the longitudinal axis A is an axis of symmetry of the sheet metal 10.

Optionally, following step S2, the sheet metal 10 is separated along the longitudinal axis A, such that the sheet metal 10 is separated into two separated sheet metals, each sheet metal defining the sheet metal 10 for step S3.

Fig. 4 shows an example of a monolithic component with integral branching points with first flange portions 16, second flange portions 18, third flange portions 22 and fourth flange portions 24. As can be seen the metal sheet on the middle and the right in Fig. 4 comprise a curvature along its length. This curvature is a result of the manufacturing process and can be advantageous in a variety of components, such as a frame 50 of an airplane as shown in Fig. 5.

Fig. 5 shows an example of an aircraft 60 in form of an airplane. The airplane 60 comprises a frame 50, wherein the frame 50 is manufactured as a monolithic component with integral branching points. The curvature induced via the manufacturing process of the frame substantially follow the curvature of the fuselage of the aircraft 60, such that a need for additional manufacturing steps is reduced.

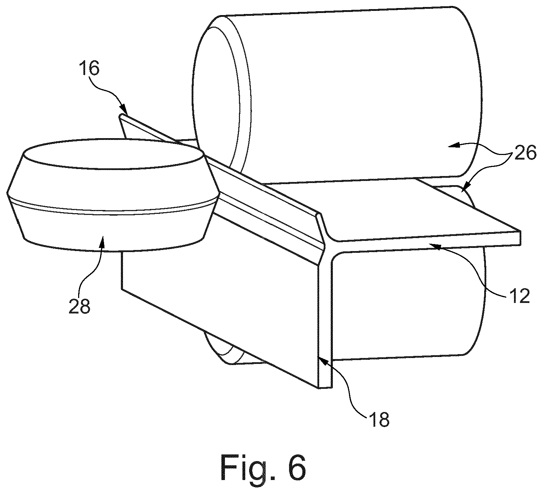

Fig. 6 shows a split-forming process according to the method 100 for manufacturing a monolithic component with integral branching points for a better understanding. A split roller 28 splits the second section 14 while support rollers 26 guide the first section 12. The second section 14 is splitted in a plane parallel to a surface area of the second section 14, such that a first flange portion 16 and a second flange portion 18 is formed.

All process steps including thinning by rolling, splitting the coil, split rollforming , roll profiling and partial rolling out for curvature need to be integrated in a sequential roll forming machine allowing a high rate production for future aircraft in single aisle configuration.

The method 100 is in general applicable for all stiffeners or brackets in the fuselage with need of a double side foot like for example shear clips, T-stringer, crash worthiness reinforced frames, crossbeams or struts, which today needed extrusion or milling or assembly steps with fastener.

### Reference Signs

- 10: sheet metal
- 12: first section
- 14: second section
- 16: first flange portion
- 18: second flange portion
- 20: third section
- 22: third flange portion
- 24: fourth flange portion
- 26: support roller
- 28: split roller
- 50: frame
- 60: aircraft
- 100: method for manufacturing a monolithic component with integral branching points

## Claims

1. A method (100) for manufacturing a monolithic component with integral branching points, comprising the following steps:
(S1) providing a sheet metal (10) comprising a first section (12) and a second section (14),
(S2) thinning, via rollforming, the first section (12) of the sheet metal (10),
(S3) splitting, via split-rollforming, the second section (14) of the sheet metal (10) in a plane parallel to a surface area of the second section (14), such that a first flange portion (16) and a second flange portion (18) is formed.

2. The method (100) according to claim 1,
wherein the first section (12) comprises a first initial thickness and the second section (14) comprises a second initial thickness, wherein the first initial thicknesses is reduced via step S1 to a first reduced thickness, and wherein the second initial thickness is reduced via step S3 to a first flange portion thickness and a second flange portion thickness.

3. The method (100) according to claim 2,
wherein the first initial thickness and the second initial thickness are the same.

4. The method (100) according to claim 2 or 3,
wherein the first reduced thickness and/or the first flange portion thickness and/or the second flange portion thickness are the same.

5. The method (100) according to any one of the preceding claims,
wherein the sheet metal (10) further comprises a third section (20), wherein the first section (12) is arranged between the second section (14) and the third section (20) of the sheet metal (10), wherein the method (100) further comprises the step of:
(S4) splitting, via split-rollforming, the third section (20) of the sheet metal (10) in a plane parallel to a surface area of the third section (20), such that a third flange portion (22) and a fourth flange portion (24) is formed.

6. The method (100) according to claim 5,
wherein the sheet metal (10) comprises a longitudinal axis (A) which divides the sheet metal (10) in two identical portions, and wherein the first section (12) is arranged in a middle portion along the longitudinal axis (A) between the second section (14) and the third section (20) of the sheet metal (10).

7. The method (100) according to claim 6,
wherein the longitudinal axis (A) is an axis of symmetry of the sheet metal (10).

8. The method (100) according to claim 6 or 7,
wherein, following step S2, the sheet metal (10) is separated along the longitudinal axis (A), such that the sheet metal (10) is separated into two separated sheet metals, each sheet metal defining the sheet metal (10) for step S3.

9. The method (100) according to claim 1 to 5, wherein the sheet metal (10) comprises a plurality of first sections (12), wherein each of the plurality of the first sections (12) comprises a longitudinal axis (A), and a plurality of second sections (14), wherein each of the plurality of the second sections (14) comprises a second longitudinal axis parallel to the first longitudinal axis (A), wherein the plurality of first sections (12) and the plurality of second sections (14) are arranged in an alternating manner, wherein, following step S2, the sheet metal (10) is separated into a plurality of separated metal sheets:
along each of the plurality of the first longitudinal axes (A),
and/or
along each of the plurality of the second longitudinal axes,
each separated metal sheets (10) defining the sheet metal for step S3.

10. The method (100) according to any one of the preceding claims,
wherein, before step S1, the sheet metal (10) is solution heat treated.

11. The method (100) according to any one of the preceding claims,
wherein, before step S1, the sheet metal (10) is stored at -18° C.

12. The method (100) according to any one of the preceding claims,
wherein the sheet metal (10) comprises at least one of: steel, aluminum, thermoplast.

13. The method (100) according to any one of claims 1 to 12,
wherein the sheet metal (10) is a coil.

14. A frame (50), wherein the frame (50) is a monolithic component manufactured via the method (100) according to any one of claims 1 to 13.

15. An aircraft (60) comprising a frame (50) according to claim 14.

## Patentansprüche

1. Verfahren (100) zur Herstellung eines monolithischen Bauteils mit integrierten Verzweigungspunkten, umfassend die folgenden Schritte:
(S1) Bereitstellung eines Blechs (10) mit einem ersten Abschnitt (12) und einem zweiten Abschnitt (14),
(S2) Ausdünnen des ersten Abschnitts (12) des Blechs (10) durch Walzprofilieren,
(S3) Aufspalten des zweiten Abschnitts (14) des Blechs (10) mittels Split-Rollforming in einer Ebene parallel zu einer Oberfläche des zweiten Abschnitts (14), sodass ein erster Flanschabschnitt (16) und ein zweiter Flanschabschnitt (18) gebildet werden.

2. Verfahren (100) nach Anspruch 1, wobei der erste Abschnitt (12) eine erste Anfangsdicke und der zweite Abschnitt (14) eine zweite Anfangsdicke aufweist, wobei die erste Anfangsdicke durch Schritt S 1 auf eine erste reduzierte Dicke verringert wird und die zweite Anfangsdicke durch Schritt S 3 auf eine erste Flanschabschnittsdicke und eine zweite Flanschabschnittsdicke verringert wird.

3. Verfahren (100) nach Anspruch 2, wobei die erste Anfangsdicke und die zweite Anfangsdicke gleich sind.

4. Verfahren (100) nach Anspruch 2 oder 3, wobei die erste reduzierte Dicke und/oder die erste Flanschabschnittdicke und/oder die zweite Flanschabschnittdicke gleich sind.

5. Verfahren (100) nach einem der vorhergehenden Ansprüche, wobei das Blech (10) ferner einen dritten Abschnitt (20) aufweist, wobei der erste Abschnitt (12) zwischen dem zweiten Abschnitt (14) und dem dritten Abschnitt (20) des Blechs (10) angeordnet ist, wobei das Verfahren (100) ferner den folgenden Schritt umfasst:
(S4) Aufspalten des dritten Abschnitts (20) des Blechs (10) mittels Split-Rollforming in einer Ebene parallel zu einer Oberfläche des dritten Abschnitts (20), sodass ein dritter Flanschabschnitt (22) und ein vierter Flanschabschnitt (24) gebildet werden.

6. Verfahren (100) nach Anspruch 5, wobei das Blech (10) eine Längsachse (A) aufweist, die das Blech (10) in zwei identische Abschnitte teilt, und wobei der erste Abschnitt (12) in einem mittleren Abschnitt entlang der Längsachse (A) zwischen dem zweiten Abschnitt (14) und dem dritten Abschnitt (20) des Blechs (10) angeordnet ist.

7. Verfahren (100) nach Anspruch 6, wobei die Längsachse (A) eine Symmetrieachse des Blechs (10) ist.

8. Verfahren (100) nach Anspruch 6 oder 7, wobei nach Schritt S2 das Blech (10) entlang der Längsachse (A) so getrennt wird, dass zwei getrennte Bleche entstehen, wobei jedes das Blech (10) für Schritt S3 definiert.

9. Verfahren (100) nach Anspruch 1 bis 5, wobei das Blech (10) eine Vielzahl von ersten Abschnitten (12) umfasst, wobei jeder der zahlreichen ersten Abschnitte eine Längsachse (A) umfasst, und eine Vielzahl zweiter Abschnitte (14), wobei jeder der mehreren zweiten Abschnitte (14) eine zweite Längsachse parallel zur ersten Längsachse (A) aufweist, wobei die Vielzahl erster Abschnitte (12) und die Vielzahl der zweiten Abschnitte (14) abwechselnd angeordnet sind, wobei nach Schritt S2 das Blech (10) in eine Vielzahl getrennter Bleche zerlegt wird:
entlang jeder der zahlreichen ersten Längsachsen (A),
und/oder
entlang jeder der zahlreichen zweiten Längsachsen jedes der einzelnen Metallbleche (10) das Blech für Schritt S3 definieren.

10. Verfahren (100) nach einem der vorhergehenden Ansprüche, wobei das Blech (10) vor Schritt S1 lösungsgeglüht wird.

11. Verfahren (100) nach einem der vorhergehenden Ansprüche, wobei das Blech (10) vor Schritt S1 bei -18° C gelagert wird.

12. Verfahren (100) nach einem der vorhergehenden Ansprüche, wobei das Blech (10) mindestens eines der folgenden Materialien aufweist: Stahl, Aluminium, Thermoplast.

13. Verfahren (100) nach einem der Ansprüche 1 bis 12, wobei es sich bei dem Blech (10) um eine Spule handelt.

14. Ein Rahmen (50), wobei der Rahmen (50) ein monolithisches Bauteil ist, das nach dem Verfahren (100) gemäß einem der Ansprüche 1 bis 13 hergestellt wurde.

15. Ein Luftfahrzeug (60) mit einem Rahmen (50) nach Anspruch 14.

## Revendications

1. Procédé (100) de fabrication d'un composant monolithique avec points de branchement intégrés, comprenant les étapes suivantes :
(S1) Fourniture d'une feuille (10) comportant une première section (12) et une deuxième section (14),
(S2) Amincissement de la première section (12) de la feuille (10) par profilage à rouleaux,
(S3) Division de la deuxième section (14) de la feuille (10) par formage par laminage fendu dans un plan parallèle à une surface de la deuxième section (14), de sorte qu'une première section de bride (16) et une La deuxième section de bride (18) est formée.

2. Procédé (100) selon la revendication 1, dans lequel la première section (12) a une première épaisseur initiale et la deuxième section (14) a une deuxième épaisseur initiale, dans lequel la première épaisseur initiale est réduite à une première épaisseur réduite par l'étape S 1 et la deuxième épaisseur initiale est réduite à une première épaisseur de section de bride et à une deuxième épaisseur de section de bride par l'étape S 3.

3. Procédé (100) selon la revendication 2, dans lequel la première épaisseur initiale et la deuxième épaisseur initiale sont identiques.

4. Procédé (100) selon la revendication 2 ou 3, dans lequel la première épaisseur réduite et/ou l'épaisseur de la première section de bride et/ou l'épaisseur de la deuxième section de bride sont identiques.

5. Procédé (100) selon l'une des revendications précédentes, dans lequel la feuille (10) comprend en outre une troisième section (20), la première section (12) étant disposée entre la deuxième section (14) et la troisième section (20) de la feuille (10), le procédé (100) comprenant en outre l'étape suivante :
(S4) Division de la troisième section (20) de la tôle (10) au moyen d'un formage par rouleau divisé dans un plan parallèle à une surface de la troisième section (20) de sorte qu'une troisième section de bride (22) et une quatrième section de bride (24) soient formées.

6. Procédé (100) selon la revendication 5, dans lequel la feuille (10) a un axe longitudinal (A) qui divise la feuille (10) en deux sections identiques, et dans lequel la première section (12) est disposée dans une section médiane le long de l'axe longitudinal (A) entre la deuxième section (14) et la troisième section (20) de la feuille (10).

7. Procédé (100) selon la revendication 6, dans lequel l'axe longitudinal (A) est un axe de symétrie de la feuille (10).

8. Procédé (100) selon la revendication 6 ou 7, dans lequel après l'étape S2 la feuille (10) est séparée le long de l'axe longitudinal (A) de sorte que deux feuilles séparées soient formées, chacune définissant la feuille (10) pour l'étape S3.

9. Procédé (100) selon les revendications 1 à 5, dans lequel la feuille (10) comprend une pluralité de premières sections (12), chacune des premières sections comprenant un axe longitudinal (A), et une pluralité de secondes sections (14), chacune des secondes sections (14) ayant un second axe longitudinal parallèle au premier axe longitudinal (A), dans lequel les multiples premières sections (12) et les multiples secondes sections (14) sont disposées alternativement, dans lequel après l'étape S2 la feuille (10) est divisée en une pluralité de feuilles séparées :
le long de chacun des nombreux premiers axes longitudinaux (A),
et/ou
le long de chacun des nombreux seconds axes longitudinaux de chacune des feuilles métalliques individuelles (10) définissent la feuille pour l'étape S3.

10. Procédé (100) selon l'une des revendications précédentes, dans lequel la feuille (10) est recuite en solution avant l'étape S1.

11. Procédé (100) selon l'une des revendications précédentes, dans lequel la feuille (10) est stockée à -18° C avant l'étape S1.

12. Procédé (100) selon l'une des revendications précédentes, dans lequel la feuille (10) comprend au moins l'un des matériaux suivants : acier, aluminium, thermoplastique.

13. Procédé (100) selon l'une des revendications 1 à 12, dans lequel la feuille (10) est une bobine.

14. Un cadre (50), dans lequel le cadre (50) est un composant monolithique fabriqué selon la méthode (100) selon l'une quelconque des revendications 1 à 13.

15. Un aéronef (60) avec un cadre (50) selon la revendication 14.
